# EUROPÄISCHE PATENTSCHRIFT

(11) **EP 0 472 937 B1**
(45) Veröffentlichungstag und Bekanntmachung des Hinweises auf die Patenterteilung: **26.01.1994**
(21) Anmeldenummer: 91112852.8
(22) Anmeldetag: 31.07.1991
(51) Int. Cl.: F16K 17/38, F16K 37/00

(54) **Absperrarmatur**
Shut-off valve
Vanne d'arrêt

(30) Priorität: 31.08.1990 DE 9012495 U
(43) Veröffentlichungstag der Anmeldung: 04.03.1992
(73) Patentinhaber: Streif, Hans, CH-6983 Magliaso/Lugano (CH)
(72) Erfinder: Gieseler, Benno, W-5942 Kirchhundem-Marmecke (DE)
(74) Vertreter: Stenger, Watzke & Ring Patentanwälte

(56) Entgegenhaltungen:
- DE-A- 3 126 214
- DE-A- 3 336 811
- DE-U- 9 002 433

## Beschreibung

Die Erfindung betrifft eine Absperrarmatur für Leitungen, insbesondere Gasleitungen, mit einem Gehäuse mit einer Eintritts- und einer Austrittsöffnung, mit einem im Gehäuse drehbar angeordneten Ventilkörper, der mit einer Verdrehvorrichtung verbunden ist, welche zwei ineinander angeordnete, relativ zueinander verdrehbare und gegeneinander arretierbare Elemente aufweist, wobei am Außenumfang des innenliegenden Elementes zwei um den Schließwinkel zueinander versetzt angeordnete Ausnehmungen angeordnet sind, mit einer Feder, die zwischen den Elementen angeordnet ist, und mit einer Steuereinheit, die ein Dehnstoffelement und einen Verriegelungsbolzen aufweist, der in eine Aussparung eingreift, wobei die Steuereinheit die Absperrarmatur bei Erreichen einer vorgegebenen Temperatur schließt.

Ein bei Leitungen für brennbare und explosive Stoffe ständig auftretendes Problem ist die Brandschutzsicherung. Häufig wird die Leitungsinstallationsanlage durch Brandeinwirkungen derart beschädigt, daß das in den Leitungen geführte Medium unkontrolliert ausströmen kann und eine Brand- und Explosionsgefahr verursacht. Aus diesem Grunde werden beispielsweise aus dem DE-GM 89 14 573 bekannte Absperrarmaturen in Leitungen eingebaut, die die Zufuhr des Mediums bei Erreichen einer bestimmten Temperatur unterbrechen. Hierzu weist die Absperrarmatur ein Armaturengehäuse auf, das vorzugsweise als ein in die Leitung einsetzbarer Rohrabschnitt ausgebildet ist und in dem ein Ventilkörper angeordnet ist. Der Ventilkörper ist mit einer Verdrehvorrichtung und einem Stellgriff verbunden. In dieser Verdrehvorrichtung ist eine vorgespannte Spiralfeder zwischen zwei ineinander angeordneten und relativ zueinander verdrehbaren Elementen angeordnet. Die Spiralfeder ist mit ihrem einen Ende am Gehäuse des Stellgriffs und mit ihrem anderen Ende an dem innenliegenden Element der Verdrehvorrichtung befestigt. Die beiden Elemente der Verdrehvorrichtung werden mit einem Verriegelungsbolzen gegeneinander arretiert. Der Bolzen kann mit einem Dehnstoffelement freigegeben werden, welches sich bei Erreichen einer vorgegebenen Temperatur ausdehnt und einen Steuerbolzen in eine Entriegelungslage verschiebt. Danach kann die vorgespannte Spiralfeder die Verdrehvorrichtung betätigen und den Ventilkörper in die Schließstellung verdrehen.

Es ist bei diesen bekannten Absperrarmaturen nachteilig, daß sie nicht in einfacher Weise auf ihre Funktionstüchtigkeit überprüft werden können. Diese Überprüfung ist notwendig, um eine Aussage darüber zu treffen, ob die Absperrarmatur auch nach längerer Zeit, beispielsweise nach fünf oder mehr Jahren, im Brandfall noch sicher auslösen würde. Die Überprüfung dieser Absperrarmatur erfordert ein Auslösen über die Erwärmung des Dehnstoffelementes, so daß die vorgespannte Spiralfeder die Verdrehvorrichtung betätigt und den Ventilkörper dreht. Nach der Kontrolle der Funktionstüchtigkeit muß dann die Absperrarmatur wieder in ihre Ausgangslage zurückgestellt und die Spiralfeder gespannt werden. Für diese Rückstellung muß die Verdrehvorrichtung demontiert werden weil ein unkontrolliertes Öffnen durch die Konstruktion verhindert wird.

Ausgehend von diesem Stand der Technik liegt der Erfindung die **Aufgabe** zugrunde, eine Absperrarmatur zu schaffen, die in einfacher Weise auf ihre Auslösefunktion überprüfbar ist und ohne Demontage der Verdrehvorrichtung zurückgestellt werden kann.

Die **Lösung** dieser Aufgabe besteht in einer in die Aussparung zu Testzwecken einsteckbaren Sperrvorrichtung.

Die Sperrvorrichtung wird in die freie Aussparrung eingesteckt und füllt diese aus, so daß der Verriegelungsbolzen nach der Drehung des innenliegenden Elementes nicht in diese Aussparung eingreifen und die beiden Elemente gegeneinander arretieren kann.

Bei einer bevorzugten Auführungsform hat die Sperrvorrichtung eine Handhabe, die rechtwinklig zu ihr angeordnet ist. Hierdurch ist es möglich, die Sperrvorrichtung nach Beendigung des Tests in einfacher Weise wieder aus der Ausnehmung herauszunehmen. Es ist dabei vorteilhaft, die Handhabe der Sperrvorrichtung radial nach innen anzuordnen, so daß Verletzungen des Benutzers beim Auslösen der Absperrarmatur vermieden werden.

Die Sperrvorrichtung weist ein abgeschrägtes Einsteckende auf, so daß sie leicht in die Aussparung eingesetzt und aus dieser wieder herausgezogen werden kann, ohne sich in der Aussparung zu verklemmen.

Im folgenden wird die Erfindung anhand einer ein bevorzugtes Ausführungsbeispiel darstellenden Zeichnung näher erläutert. Es zeigen:
- Fig. 1: eine Absperrarmatur im Längsschnitt;
- Fig. 2: die Absperrarmatur gemäß Fig. 1 in einer Draufsicht;
- Fig. 3: die Absperrarmatur gemäß den Fig. 1 und 2 vor der Testauslösung entlang der Linie III-III in Fig. 1 geschnitten;
- Fig. 4: die Absperrarmatur gemäß Fig. 3 nach der Testauslösung;
- Fig. 5: eine Sperrvorrichtung in Draufsicht und
- Fig. 6: die Sperrvorrichtung gemäß Fig. 5 in Seitenansicht.

Die Absperrarmatur weist ein Gehäuse 2 und eine Verdrehvorrichtung 1 auf. Das Gehäuse 2 ist aus zwei Gehäusehälften 3, 4 und einem Verbindungselement 5 zusammengesetzt.

Zwischen den beiden Gehäusehälften 3, 4 ist ein Ventilkörper 9 über eine Welle 14, die durch ein Wellenlager 7 greift, mit der Verdrehvorrichtung 1 verbunden. Die beiden Gehäusehälften 3, 4 weisen eine Einlaß- und eine Auslaßöffnung auf. An den dem Ventilkörper 9 zugewandten Seiten der Gehäusehälften 3, 4 ist jeweils eine umlaufende Nut 8 angeordnet, in die eine Dichtungspackung 10 eingelegt ist.

Der Ventilkörper 9 hat die Form einer Kugel, in der eine Bohrung 15 als Durchlaßkanal angeordnet ist, und kann über die Welle 14, die durch das Wellenlager 7 greift, mit der Verdrehvorrichtung 1 gedreht werden.

Die Verdrehvorrichtung 1 hat einen Stellgriff 16, an dem ein erstes drehbares Element 17 angeordnet ist, welches die Form einer Pfanne aufweist. In dem pfannenförmigen Element 17 ist ein zweites drehbares Element 19 angeordnet, das mit einer Schraube 20 auf dem Kopf der Welle 14 verschraubt ist. Zwischen den drehbaren Elementen 17, 19 ist eine Spiralfeder 18 angeordnet, die mit ihrem einen Ende am Element 17 und mit ihrem anderen Ende am Element 19 befestigt ist.

Das innenliegende Element 19 hat am äußeren Umfang zwei Aussparungen 26 und 32, welche um 90° zueinander versetzt angeordnet sind. Die Aussparung 32 ist eine axial verlaufende, rechteckige Nut, wogegen die Aussparung 26 kegelförmig ausgebildet und in radialer Richtung des Elementes 19 angeordnet ist.

In die Aussparung 32 ist eine Sperrvorrichtung 33 eingesteckt, die eine Handhabe 34 hat. Ein der Handhabe 34 abgewandtes Einsteckende 35 der Sperrvorrichtung 33 ist auf einer Seite abgeschrägt.

An dem pfannenförmigen Element 17 ist außen eine Steuereinheit 21 angeordnet, die eine Patrone 22 mit einem Dehnstoffelement 31, beispielsweise aus Paraffin, aufweist. Am Kopf der Patrone 22 ist ein Steuerbolzen 23 befestigt, der in seinem Mittelbereich verjüngt ausgebildet ist. Zwischen dem Steuerbolzen 23 und dem Gehäuse der Steuereinheit 21 ist eine Druckfeder 24 angeordnet, die den Steuerbolzen 23 auf das Dehnstoffelement 31 drückt.

Das Gehäuse der Steuereinheit 21 durchgreift mit einem rohrförmigen Ansatz das pfannenförmige Element 17. In diesem rohrförmigen Ansatz ist ein Verriegelungsbolzen 25 im rechten Winkel zum Steuerbolzen 23 angeordnet. Der Verriegelungsbolzen 25 greift mit einem halbkugelförmigen Ende durch das Rohrstück und das pfannenförmige Element 17 des Stellgriffs 16 in die am Element 19 angeordnete kegelförmige Aussparung 26. An dem, dem halbkugelförmigen Ende gegenüberliegenden Ende des Verriegelungsbolzens 25 ist eine zweite Druckfeder 27 angeordnet. Der Verriegelungsbolzen 25 weist ebenfalls in seiner Mitte eine Verjüngung auf. An der Unterseite des pfannenförmigen Elementes 17 ist eine Aussparung 28 angeordnet, die die Form eines Viertelkreises aufweist. In dieser Aussparung 28 ist ein Kerbstift 29 geführt, der in einer Bohrung 30 des Wellenlagers 7 befestigt ist. Durch den Kerbstift ist eine Bewegung des Stellgriffs 16 in einem Bereich von 90° möglich, so daß die Absperrarmatur zwischen einer offenen Stellung und einer geschlossenen Stellung des Ventilkörpers 9 stufenlos verstellt werden kann.

Die Funktionsweise der Absperrarmatur und der Testauslösung ist wie folgt:

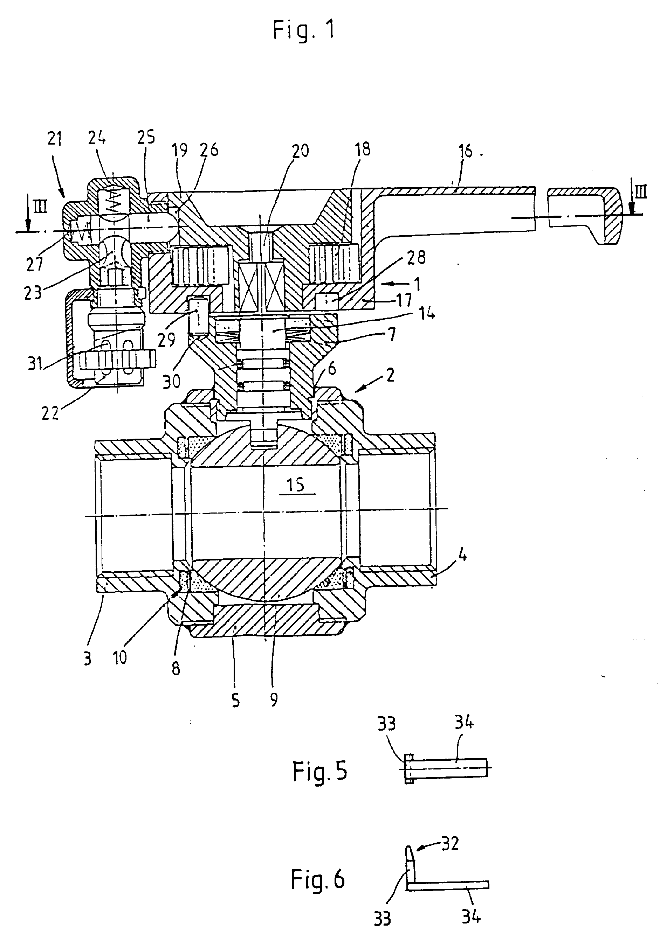

In den Figuren 1, 2 und 3 ist die Absperrarmatur in ihrer offenen Stellung gezeigt. Die Bohrung 15 des Ventilkörpers 9 verbindet dabei die Einlaß- und die Auslaßöffnung der beiden Gehäusehälften 3, 4. Die zwischen dem Element 19 und dem pfannenförmigen Element 17 des Stellgriffs 16 angeordnete Spiralfeder 18 ist vorgespannt. Die Druckfeder 24 drückt den Bolzen 23 gegen das Dehnelement der Patrone 22, so daß der Bolzen 24 mit seinem nicht verjüngten Ende in die Verjüngung des Verriegelungsbolzens 25 eingreift. Auf diese Art kann der Verriegelungsbolzen 25 nicht verschoben werden und greift mit seinem halbkugelförmigen Ende in die Aussparung 26 des Elements 19.

Zur Ausführung einer Testauslösung der Absperrarmatur wird die Sperrvorrichtung 33 mit ihrem abgeschrägten Einsteckende 35 derart in die Aussparung 32 eingesteckt, daß die Handhabe 34 radial nach innen ausgerichtet ist. Im Anschluß hieran wird das Dehnstoffelement 31 mit einem handelsüblichen Feuerzeug oder einer anderen Wärmequelle erwärmt, so daß sich das Dehnstoffelement 31 ausdehnt und den Bolzen 23 entgegen der Federkraft der Druckfeder 24 nach oben verschiebt. Nunmehr kann der Verriegelungsbolzen 25 in begrenztem Maße verschoben werden.

Da die Federkraft der Spiralfeder 18 größer ist als die Kraft der Feder 27 wird das Element 19 gedreht, wobei das halbkugelförmige Ende des Verriegelungsbolzens 25 aus der Aussparung 26 herausgedrückt wird. Die Spiralfeder ist so vorgespannt, daß sich der Ventilkörper 9 um ca. 90° dreht und die Absperrarmatur verschließt.

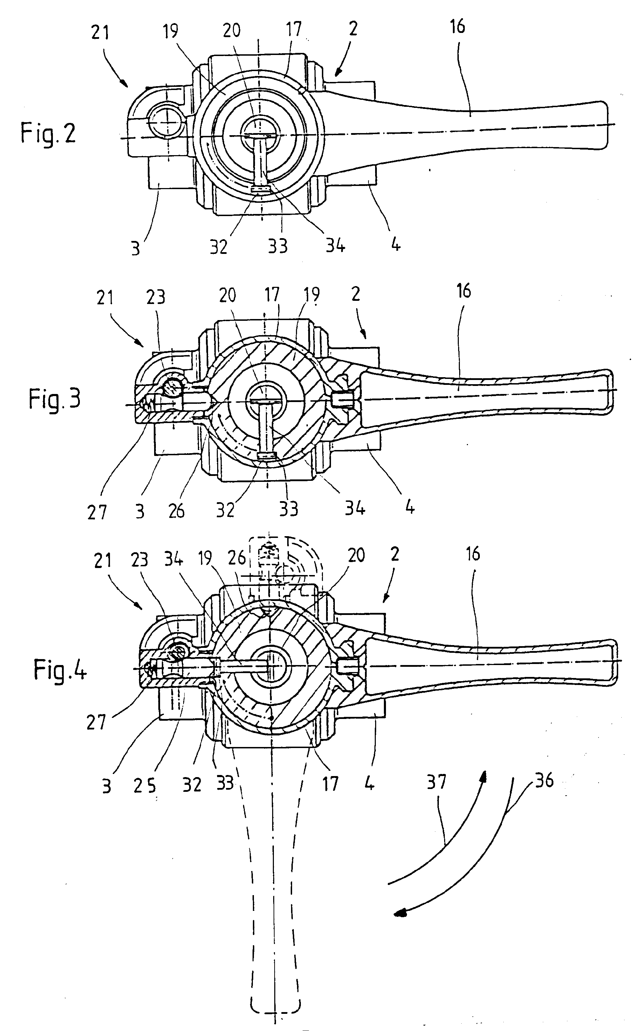

In dieser verschlossenen Stellung der Absperrarmatur wird der Verriegelungsbolzen 25 durch die Druckfeder 27 gegen die in die Aussparung 32 eingesteckte Sperrvorrichtung 33 gedrückt. Diese geschlossene Stellung ist in Fig. 4 dargestellt.

Nach der Testauslösung wird der Stellgriff 16 in Richtung eines Pfeils 36, in die in Fig. 4 gestrichelt dargestellte Stellung gedreht, wobei das Element 17 relativ zu dem Element 19 verdreht wird, und der Verriegelungsbolzen 25 in die Aussparung 26 eingreift und durch den Bolzen 23 verriegelt wird. Bei dieser Drehung des Stellgriffs 16 wird auch die Spiralfeder 18 gespannt.

Anschließend wird der Stellgriff 16 in Richtung eines Pfeils 37 in seine Ausgangslage zurückgedreht, wobei die nunmehr gegeneinander arretierten Elemente 17 und 19 gemeinsam in die gleiche Richtung gedreht werden und die Absperrarmatur wieder geöffnet wird.

## Patentansprüche

1. Absperrarmatur für Leitungen, insbesondere Gasleitungen, mit einem Gehäuse (2) mit einer Eintritts- und einer Austrittsöffnung, einem im Gehäuse (2) drehbar angeordneten Ventilkörper (9), der mit einer Verdrehvorrichtung (1) verbunden ist, welche zwei ineinander angeordnete, relativ zueinander verdrehbare und gegeneinander arretierbare Elemente (17, 19) aufweist, wobei am Außenumfang des innenliegenden Elementes (19) zwei um den Schließwinkel zueinander versetzt angeordnete Ausnehmungen (26, 32) angeordnet sind, mit einer Feder (18), die zwischen den Elementen (17, 19) angeordnet ist, und mit einer Steuereinheit (21), die ein Dehnstoffelement (31) und einen Verriegelungsbolzen (25) aufweist, der in eine Aussparung (26) eingreift, wobei die Steuereinheit (21) die Absperrarmatur beim Erreichen einer vorgegebenen Temperatur schließt,
**gekennzeichnet durch**
eine in die Aussparung (32) zu Testzwecken einsteckbare Sperrvorrichtung (33).

2. Absperrarmatur nach Anspruch 1, dadurch gekennzeichnet, daß die Sperrvorrichtung (33) eine im rechten Winkel zu ihr angeordnete Handhabe (34) hat.

3. Absperrarmatur nach Anspruch 1 oder 2, dadurch gekennzeichnet, daß ein Einsteckende (35) der Sperrvorrichtung (33) auf mindestens einer Seite angeschrägt ist.

## Claims

1. Shut-off fitting for pipes, particularly gas pipes, comprising a casing (2) having an inlet opening and an outlet opening, a valve body (9) arranged for rotation in the casing (2) and connected to a turning device (1) which has two elements (17, 19) disposed one in the other, rotatable relative to each other and lockable in respect of one another, wherein on the outer periphery of the inner element (19) there are arranged two recesses (26, 32) which are arranged offset by the closing angle relative to one another, and comprising a spring (18) arranged between the elements (17, 19), and comprising a control unit (21) which is provided with an expansible-material element (31) and a locking pin (25) engaging in a recess (26), the control unit (21) closing the shut-off fitting when a predetermined temperature is reached, characterized by a blocking device (33) which can be inserted into the recess (32) for test purposes.

2. Shut-off fitting according to Claim 1, characterized in that the blocking device (33) has a handle (34) arranged at right angles to it.

3. Shut-off fitting according to Claim 1 or 2, characterized in that an insertion end (35) of the blocking device (33) is bevelled on at least one side.

## Revendications

1. Vanne d'arrêt pour canalisations, notamment canalisations de gaz, comportant un corps (2) muni d'un orifice d'entrée et d'un orifice de sortie, un obturateur (9) monté à rotation dans le corps (2) et relié à un dispositif d'entraînement en rotation (1) muni de deux éléments (17, 19) disposés l'un dans l'autre, pouvant tourner l'un par rapport à l'autre et pouvant être bloqués l'un par rapport à l'autre, deux évidements (26, 32) décalés de l'angle de fermeture l'un par rapport à l'autre étant disposés à la périphérie de l'élément intérieur (19), un ressort (18) étant disposé entre les éléments (17, 19), et une unité de commande (21) munie d'un élément à matière dilatable (31) et d'une broche de verrouillage (25) s'engageant dans un évidement (26), l'unité de commande (21) fermant la vanne d'arrêt lorsqu'une température prédéterminée est atteinte,
caractérisée par un organe d'arrêt (33) pouvant être introduit dans l'évidement (32) pour effectuer des tests de contrôle.

2. Vanne d'arrêt selon la revendication 1, caractérisée en ce que l'organe d'arrêt (33) comporte une manette (34) disposée à angle droit par rapport à cet organe.

3. Vanne d'arrêt selon la revendication 1 ou la revendication 2, caractérisée en ce que l'extrémité d'introduction (35) de l'organe d'arrêt (33) est chanfreinée, au moins d'un côté.
